# EUROPÄISCHE PATENTSCHRIFT

(11) **EP 3 172 101 B1**
(45) Veröffentlichungstag und Bekanntmachung des Hinweises auf die Patenterteilung: **05.08.2020**
(21) Anmeldenummer: 15747748.0
(22) Anmeldetag: 22.05.2015
(51) Int. Cl.: B60T 13/66, B60T 13/68, B60T 15/02

(54) **ELEKTROPNEUMATISCHES REGELVENTIL**
ELECTROPNEUMATIC REGULATING VALVE
SOUPAPE DE COMMANDE ÉLECTROPNEUMATIQUE

(30) Priorität: 23.07.2014 DE 102014010815
(43) Veröffentlichungstag der Anmeldung: 31.05.2017
(73) Patentinhaber: WABCO GmbH, 30453 Hannover (DE)
(72) Erfinder: BEIER, Peter, 31515 Wunstorf (DE); COUPPEE, Ulrich, 31863 Coppenbruegge (DE); ELZE, Petra, 30455 Hannover (DE); FABIAN, Alexander, 31224 Peine (DE); HOMANN, Sven, 30900 Wedemark (DE); HÖRSTMANN, Jan, 31275 Lehrte (DE); MARTINI, Gerhard, 30989 Gehrden (DE); RIEDIGER-JANISCH, Karl-Heinz, 30455 Hannover (DE)
(74) Vertreter: Lauerwald, Jörg
(86) Internationale Anmeldenummer: PCT/EP2015/001112
(87) Internationale Veröffentlichungsnummer: WO 2016/012066

(56) Entgegenhaltungen:
- EP-A1- 0 590 515
- EP-A2- 1 000 830
- WO-A1-03/000530
- WO-A1-2006/067070
- DE-A1- 2 517 907
- DE-A1- 2 737 628
- DE-A1- 2 820 107
- DE-A1- 3 209 247
- DE-A1- 19 510 492
- DE-A1- 19 839 843
- DE-A1-102008 007 524
- DE-A1-102010 054 052

## Beschreibung

Die Erfindung betrifft ein elektropneumatisches Regelventil, nämlich einen elektropneumatischen Zwei-Kreis-Bremswertgeber in einem Druckluftbremssystem eines Fahrzeugs, zum Ausregeln eines einer gewünschten Bremswirkung entsprechenden Bremsdrucks in einem ersten Bremskreis und in einem zweiten Bremskreis, mit einem in einem oberen Gehäusebereich und einem mittleren Gehäusebereich eines Regelventilgehäuses angeordneten pedalbetätigbaren ersten Ventilsystem, mit einem in einem unteren Gehäusebereich des Regelventilgehäuses angeordneten pneumatisch und/oder mechanisch durch das erste Ventilsystem betätigbaren zweiten Ventilsystem, bei dem im ersten Ventilsystem ein Ventilkolben in dem Regelventilgehäuse angeordnet und mittels eines Stößelkolbens gegen eine Federkraft axial verschiebbar ist, bei dem in einer Aufnahmevorrichtung im Bereich des Stößelkolbens oder des Ventilkolbens des ersten Ventilsystems ein elektrischer Schalter zum Registrieren des Betätigungsbeginns des Regelventils und ein Wegsensor zum Ausgeben eines elektrischen Wegsignals zum Registrieren des Betätigungsweges des Stößelkolbens angeordnet sind, und bei dem der elektrische Schalter und der Wegsensor an eine elektronische und/oder elektromechanische Messeinheit angeschlossen sind.

Ein solcher elektropneumatischer Zwei-Kreis-Bremswertgeber ist in der Veröffentlichung der Anmelderin mit dem Titel "EWS - Elektronisch geregeltes Bremssystem im Reisebus O 580" offenbart, welche im Internet unter inform.wabco-auto.com/intl/pdf/ 815/000/268/815 _268.pdf aufrufbar ist.

Dieser bekannte Bremswertgeber dient zur Erzeugung von elektrischen und pneumatischen Signalen zum Be- und Entlüften von Komponenten eines elektronisch geregelten Bremssystems. Der Bremswertgeber ist zweikreisig pneumatisch und zweikreisig elektrisch aufgebaut. Der Betätigungsbeginn wird durch einen Doppelschalter elektrisch registriert, der mit einem Steuergerät verbunden ist. Dazu wird der Weg des Betätigungsstößels sensiert und als elektrisches Signal pulsweitenmoduliert ausgegeben. Weiterhin werden durch diesen Bremswertgeber die pneumatischen Redundanzdrücke im ersten und zweiten Bremskreis ausgesteuert. Dabei wird der Druck des zweiten Bremskreises mittels eines Stufenkolbens geringfügig zurückgehalten. Beim Ausfall eines Bremskreises (elektrisch oder pneumatisch) bleiben die anderen Bremskreise funktionstüchtig.

Die Funktionsweise des pneumatischen Teils dieses Bremswertgebers ist in der DE 42 32 146 A1 im Einzelnen beschrieben und ist nicht Teil der vorliegenden Erfindung. Sie ist daher vorliegend nicht vollständig beschrieben, jedoch ist deren diesbezüglicher, an sich bekannter Inhalt hier vollständig zum Gegenstand der Offenbarung gemacht.

In der vorstehend erwähnten Veröffentlichung der Anmelderin ist der elektrische Teil des Bremswertgebers schematisch dargestellt. Es ist ersichtlich, dass am Gehäuse des Bremswertgebers eine Aufnahmevorrichtung für einen Schalter und einen Wegsensor angeordnet ist, und dass Kabelverbindungen vom Schalter sowie vom Wegsensor zu einem Steckverbinder geführt sind, an den sich ein Zentralmodul anschließen lässt, welches die vom Schalter und vom Wegsensor ausgehenden elektrischen Signale verarbeitet sowie die elektrische Ansteuerung von Magnetventilen für die Bremsen eines Fahrzeugs bewirkt.

Dieser Bremswertgeber hat sich bewährt und vielfältig Anwendung gefunden. Da dieser Bremswertgeber als elektrische Bauteile nur den Schalter und den Wegsensor aufweist, übernimmt das Zentralmodul die Auswertung der vom Bremswertgeber ausgehenden elektrischen Signale, um die Bremsen des Fahrzeugs anzusteuern. Dementsprechend ist es erforderlich, das Zentralmodul für jeden Fahrzeugtyp individuell zu programmieren beziehungsweise mit entsprechenden Bauteilen zu versehen. Diese bedeutet, dass das Zentralmodul jeweils anwendungsspezifisch eingerichtet werden muss, während der elektropneumatische Bremswertgeber universell einsetzbar ist. Hierdurch wird die Komplexität des Zentralmoduls und die Leistungsanforderung an das Zentralmodul stark erhöht.

Ein weiteres derartiges System ist auch aus der DE 10 2010 054 052 A1 bekannt.

Vor diesem Hintergrund liegt der Erfindung die Aufgabe zugrunde, ein verbessertes elektropneumatisches Regelventil, nämlich einen elektropneumatischen Zwei-Kreis-Bremswertgeber in einem Druckluftbremssystem eines Fahrzeugs vorzuschlagen, das ermöglicht, ohne Anpassung eines Zentralmoduls an einen vorgegebenen Fahrzeugtyp mit einem elektronisch geregelten Bremssystem auszukommen, und eine einfache Anpassung des elektropneumatischen Regelventils an ein vorgegebenes elektronisch geregeltes Bremssystem eines vorgegebenes Fahrzeugs vorzunehmen.

Gelöst wird diese Aufgabe durch ein elektropneumatisches Regelventil mit den Merkmalen des Anspruchs 1. Vorteilhafte Weiterbildungen sind in den Unteransprüchen definiert.

Demnach geht die Erfindung aus von einem elektropneumatischen Regelventil, nämlich von einem elektropneumatischen Zwei-Kreis-Bremswertgeber in einem Druckluftbremssystem eines Fahrzeugs, zum Ausregeln eines einer gewünschten Bremswirkung entsprechenden Bremsdrucks in einem ersten Bremskreis und in einem zweiten Bremskreis, mit einem in einem oberen Gehäusebereich und einem mittleren Gehäusebereich eines Regelventilgehäuses angeordneten pedalbetätigbaren ersten Ventilsystem, mit einem in einem unteren Gehäusebereich des Regelventilgehäuses angeordneten pneumatisch und/oder mechanisch durch das erste Ventilsystem betätigbaren zweiten Ventilsystem, bei dem im ersten Ventilsystem ein Ventilkolben in dem Regelventilgehäuse angeordnet ist, welcher mittels eines Stößelkolbens gegen eine Federkraft axial verschiebbar ist, bei dem in einer Aufnahmevorrichtung im Bereich des Stößelkolbens oder des Ventilkolbens des ersten Ventilsystems ein elektrischer Schalter zum Registrieren des Betätigungsbeginns des Regelventils und ein Wegsensor zum Ausgeben eines elektrischen Wegsignals zum Registrieren des Betätigungsweges des Stößelkolbens angeordnet sind, und bei dem der elektrische Schalter und der Wegsensor an eine elektronische und/oder elektromechanische Messeinheit angeschlossen sind.

Zur Lösung der gestellten Aufgabe ist bei diesem Regelventil vorgesehen, dass die elektronische und/oder elektromechanische Messeinheit als anwendungsspezifische Untereinheit eines elektronisch geregelten Bremssystems ausgebildet sowie in einem teilweise geschlossenen Elektronikgehäuse angeordnet ist, und dass das Elektronikgehäuse auswechselbar an oder in der Aufnahmevorrichtung des Regelventils befestigbar ist.

Mit diesem Regelventil ist es möglich, die in dem Elektronikgehäuse angeordnete elektronische und/oder elektromechanische Messeinheit als anwendungsspezifische Untereinheit für den jeweiligen Anwendungsfall einzurichten, ohne dass das damit verbindbare Zentralmodul verändert beziehungsweise angepasst werden muss. Die als anwendungsspezifische Untereinheit ausgebildete Messeinheit erzeugt die zur Steuerung des elektronisch geregelten Bremssystems erforderlichen Signale autonom, die dann direkt oder über das Zentralmodul den Bremsventilen für die Fahrzeugbremsen zugeleitet werden.

Dadurch, dass die als anwendungsspezifische Untereinheit ausgestattete elektronische und/oder elektromechanische Messeinheit in einem teilweise geschlossenen Elektronikgehäuse angeordnet ist, welches auswechselbar mit der Aufnahmevorrichtung des Regelventilgehäuses verbindbar ist, kann dass Regelventil den jeweiligen Bedürfnissen entsprechend mit Messmitteln ausgestattet sein. Es ist lediglich erforderlich, dass die jeweils benötigte, im Elektronikgehäuse angeordnete anwendungsspezifische elektronische Untereinheit an der Aufnahmevorrichtung des Regelventils anzuordnen, wodurch automatisch die Verbindungen zu den jeweils gewählten Messmitteln hergestellt werden.

Gemäß einer vorteilhaften Weiterbildung der Erfindung ist vorgesehen, dass das Elektronikgehäuse einen topfförmigen Deckel und ein damit abgedichtet verbundenes Bodenteil aufweist, dass in dem Elektronikgehäuse eine Leiterplatte befestigt ist, welche das ortsfeste Bauteil des elektrischen Schalters und/oder das ortsfeste Bauteil des Wegsensors und/oder einen Drucksensor trägt, dass die Leiterplatte den Schalter und/oder die Sensoren mit einem an der Außenseite des Elektronikgehäuses angeordneten Steckverbinder elektrisch verbindet, und dass das Elektronikgehäuse derart in die an der radialen Außenseite des Regelventilgehäuses ausgebildete Aufnahmevorrichtung befestigbar ist, und dass zwischen dem Bodenteil des Elektronikgehäuses und der radialen Außenseite des Regelventilgehäuses ein Raum ausgebildet ist, in dem ein bewegliches Bauteil des elektrischen Schalters und/oder ein bewegliches Bauteil des Wegsensors angeordnet sind.

Dabei kann mit Vorteil vorgesehen sein, dass das bewegliche Bauteil des Wegsensors radial innen an einer Führungsfläche an der radialen Außenseite des Regelventilgehäuses geführt wird.

Damit das bewegliche Bauteil des Wegsensors, der so genannte Signalgeber, unmittelbar einer axialen Bewegung des Ventilkolbens folgen kann, sieht eine weitere Ausgestaltung der Erfindung vor, dass in dem Bereich des Regelventilgehäuses eine scheibenförmige Druckplatte angeordnet ist, auf deren Oberseite der Stößelkolben wirkt und an dessen Unterseite sich mindestens eine Druckfeder axial abstützt, dass die Druckplatte radial außen eine Einsenkung aufweist, und dass am stößelkolbenseitigen Ende des beweglichen Bauteils des Wegsensors ein radial nach innen weisendes Verbindungselement ausgebildet ist, welches in die Einsenkung der Druckplatte eingreift.

Um eine besonders sichere und stabile Mitnahmeverbindung an dem beweglichen Teil des Wegsensors und der Druckplatte zu schaffen, kann vorgesehen sein, dass die Druckplatte radial außen einen radialen Vorsprung aufweist, welcher in eine radiale Aufnahmenut am stößelkolbenseitigen Ende des beweglichen Bauteils des Wegsensors eingreift.

Damit der Beginn der Betätigung des Regelventils auch bei einem sehr kleinen anfänglichen Betätigungsweg des Stößelkolbens und damit der Druckplatte zuverlässig sowie einfach sentierbar ist, kann zusätzlich zu dem Wegsensor der bereits genannte, technisch einfachere Schalter vorgesehen sein. Dieser Schalter wird ebenfalls durch die axiale Bewegung der stößelbetätigten Druckplatte geschaltet. Hierzu ist ein Betätigungsmittel zwischen der Druckplatte und dem ortsfesten Bauteil des Schalters angeordnet. Das Betätigungsmittel zur unmittelbaren Betätigung des Schalters ist beispielsweise als ein an einem Schwenklager drehbarer gelagerter Schwenkhebel ausgebildet, der zwei miteinander verbundene Schenkel aufweist, von denen der erste, radial ausgerichtete Schenkel ebenfalls in die genannte radial Einsenkung an der Druckplatte eingreift, und von denen der zweite, axial ausgerichtete Schenkel bei einer nach radial außen gerichteten Schwenkbewegung mit dem Schalter in Betätigungskontakt gerät.

Sofern ein Drucksensor im Elektronikgehäuse angeordnet ist, muss diesem ein zu messender Fluiddruck zugeleitet werden. Hierzu sieht eine weitere Ausgestaltung des Regelventils gemäß der Erfindung vor, dass im Regelventilgehäuse eine radiale Bohrung ausgebildet ist, welche einen axial unterhalb des Ventilkolbens ausgebildeten Druckraum mit dem Drucksensor verbindet.

Die vorstehend definierte Aufgabe wird des Weiteren durch ein Nutzfahrzeug mit einem elektropneumatischen Regelventil der vorstehend definierten Art gelöst. Ebenso wird die genannte Aufgabe durch die Verwendung des vorstehend beschriebenen elektropneumatischen Regelventils in einem Nutzfahrzeug gelöst.

Die Erfindung wird nachstehend anhand eines in der beigefügten Zeichnungsfigur dargestellten Ausführungsbeispiels weiter erläutert.

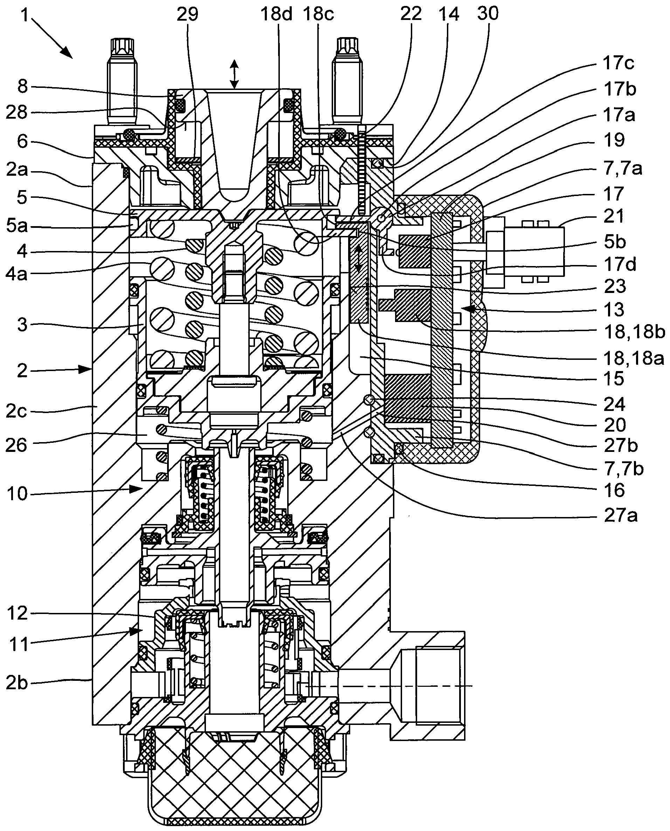

Das erfindungsgemäße elektropneumatische Regelventil ist in der einzigen Zeichnungsfigur als ein elektropneumatischer Zwei-Kreis-Bremswertgeber 1 ausgebildet, welcher in einem Druckluftbremssystem eines Fahrzeugs zum Ausregeln eines einer gewünschten Bremswirkung entsprechenden Bremsdrucks in einem ersten und einem zweiten Bremskreis dient. Der Bremswertgeber 1 weist ein in einem oberen und einem mittleren Gehäusebereich 2a, 2c eines Regelventilgehäuses 2 angeordnetes, pedalbetätigbares erstes Ventilsystem 10 sowie ein in einem unteren Gehäusebereich 2b des Regelventilgehäuses 2 angeordnetes, pneumatisch und/oder mechanisch durch das erste Ventilsystem 10 betätigbares zweites Ventilsystem 11 auf.

Im oberen Gehäusebereich 2a des Regelventilgehäuses 2 ist ein Ventilkolben 3 des ersten Ventilsystems 10 abgedichtet axial geführt. Zwischen dem Ventilkolben 3 des ersten Ventilsystems 10 und einer axial darüber angeordneten kreisförmigen Druckplatte 5 ist ein Druckfederpaket mit zwei zueinander koaxial angeordneten Druckfedern 4, 4a platziert. Auf die federferne Stirnseite der Druckplatte 5 wirkt bei einer Betätigung des Bremswertgebers 1 ein Stößelkolben 8 ein, welcher axial verschiebbar in einem Gehäusedeckel 6 angeordnet ist. Der Stößelkolben 8 weist im Bereich seines größeren Durchmessers eine ringförmige, nach axial innen gerichtete Anschlagfläche 28 auf, die zur Anlage an eine Anschlagscheibe 29 gelangt, sobald der Stößelkolben 8 maximal weit in Richtung zur Druckplatte 5 bewegt wurde. Die Anschlagscheibe 29 wird von dem durchmesserkleineren Abschnitt des Stößelkolbens 8 axial durchdrungen. Durch die Anordnung mehrerer und/oder unterschiedlich dicker Anschlagscheiben 29 kann der maximale Betätigungsweg des Stößelkolbens 8 festgelegt werden.

Eine Axialbewegung des Stößelkolbens 8 erzeugt über die Druckplatte 5 und das Druckfederpaket 4, 4a eine Axialbewegung des Ventilkolbens 3 des ersten Ventilsystems 10. Diese Bewegung des Ventilkolbens 3 überträgt sich über das erste Ventilsystem 10 auf einen Relaiskolben 12, der in bekannter Weise das zweite Ventilsystem 11 beeinflusst, wodurch in einem ersten Bremskreis und einem zweiten Bremskreis entsprechende Bremsdrücke generiert werden.

Im oberen Bereich 2a des Regelventilgehäuses 2 ist in einem etwas dickeren Wandbereich eine radial ausgerichtete Aufnahmevorrichtung 14 ausgebildet, an die oder in die ein teilweise verschlossenes Elektronikgehäuse 7 ansetzbar beziehungsweise einsetzbar ist. Das Elektronikgehäuse 7 weist einen topfförmigen Deckel 7a sowie ein Bodenteil 7b auf, die miteinander verbunden sind. Das Bodenteil 7b weist in Richtung zum Regelventilgehäuse 2 zumindest eine Öffnung auf, welche zum Durchgriff von Betätigungsmitteln zur Betätigung von in dem Elektronikgehäuse 7 angeordneten Sensoren und/oder Schaltern dienen. Die Umfangsgeometrie des Bodenteils 7b ist an die Umfangsgeometrie der Aussparung 14 angepasst. Das Elektronikgehäuse 7 ist gegenüber dem Regelventilgehäuse 2 mittels einer Dichtung 30 abgedichtet, welche in diesem Ausführungsbeispiel in eine Nut im Bodenteil 7b eingesetzt ist. Außerdem ist bei dem gezeigten Elektronikgehäuse 7 das Bodenteil 7b gegen den Deckel 7a mittels einer weiteren Dichtung 16 abgedichtet.

Im Elektronikgehäuse 7 ist eine als anwendungsspezifische Untereinheit eines nicht dargestellten elektronisch geregelten Bremssystems ausgebildete elektronische und/oder elektromechanische Messeinheit 13 angeordnet. Entsprechend dem Fahrzeugtyp und dem in diesem Fahrzeugtyp vorgesehenen elektronisch geregelten Bremssystem ist die Messeinheit 13 als anwendungsspezifische Untereinheit ausgebildet, so dass es nur notwendig ist, das Elektronikgehäuse 7 mit der darin angeordneten anwendungsspezifisch ausgebildeten Messeinheit 13 mit der Aufnahmevorrichtung 14 des Bremswertgebers 1 zu verbinden, um die erforderliche anwendungsspezifische Anpassung desselben vorzunehmen.

Die in dem Elektronikgehäuse 7 angeordnete Messeinheit 13 weist eine Leiterplatte 19 auf, die einige elektronische Bauelemente trägt und die an dem Deckel 7a in geeigneter Weise befestigt ist. An der Leiterplatte 19 ist ein ortsfester elektrischer Schalter 17, ein ortsfestes Bauteil 18b eines Wegsensors 18 und einen ortsfester Drucksensor 20 befestigt sowie elektrisch mit dortigen Leiterbahnen kontaktiert. Die Leiterplatte 19 ist mit einem an der Außenseite des Elektronikgehäuses 7 angeordneten Steckverbinder 21 elektrisch verbunden, an dem ein nicht gezeigter Kabelstecker anschließbar ist. Das Elektronikgehäuse 7 ist derart an der an der radialen Außenseite des Regelventilgehäuses 2 ausgebildete Aufnahmevorrichtung 14 des Regelventils 1 befestigbar beziehungsweise radial teilweise in diese einsetzbar, dass zwischen dem Bodenteil 7b des Elektronikgehäuses 7 und der radialen Außenseite des Regelventilgehäuses 2 ein Raum 15 ausgebildet ist, in dem ein Betätigungsmittel 17a zur Betätigung des elektrischen Schalters 17 und ein bewegliches Bauteil 18a des Wegsensors 18 angeordnet sind.

Das Betätigungsmittel für den elektrischen Schalter 17 ist als ein an einem Schwenklager 17b drehbar gelagerter Schwenkhebel 17a ausgebildet, welcher zwei miteinander verbundene sowie rechtwinklig zueinander angeordnete Schenkel 17c, 17d aufweist. Der erste, radial ausgerichtete Schenkel 17c greift in eine radiale Einsenkung 5a ein, die radial außen an der Druckplatte 5 ausgebildet ist. Der zweite, axial ausgerichtete Schenkel 17d ist so ausgerichtet und angeordnet, dass dieser bei einer radial nach außen gerichteten Schwenkbewegung einen Schaltkontakt des ortsfesten Schalters 17 betätigt.

Mittels einer axial durch den Gehäusedeckel 6 und das Bodenteil 7b des Elektronikgehäuses 7 geführten sowie auf den ersten Schenkel 17c des Schwenkhebels 17a wirkenden Einstellschraube 22 lässt sich der Ansprechpunkt des Schalters 17 einstellen. Das dargestellte Ausführungsbeispiel zeigt zwar einen elektromechanischen Schalter, dieser Schalter 17 kann aber auch als Näherungsschalter ausgebildet sein, der ohne direkten Kontakt berührungsfrei reagiert. Derartige Näherungsschalter sind bekannt und können als induktive Näherungsschalter, kapazitive Näherungsschalter, magnetische Näherungsschalter, optische Näherungsschalter, Ultraschall-Näherungsschalter oder elektromagnetische Näherungsschalter ausgeführt sein.

Das bewegliche Bauteil 18a des Wegsensors 18 wird radial innen an einer Führungsfläche 23 an der radialen Außenseite des Regelventilgehäuses 2 geführt. An ihrem stößelkolbenseitigen Ende ist an dem beweglichen Bauteil 18a des Wegsensors 18 ein radial nach innen weisendes Verbindungselement 18c ausgebildet, welches ebenfalls in die schon erwähnte radiale Einsenkung 5a an der Druckplatte 5 eingreift. Hierdurch wird nicht nur der Schwenkhebel 17a sondern auch das bewegliche Bauteil 18a des Wegsensors 18 axial mitgenommen, wenn sich die Druckplatte 5 aufgrund einer Betätigung des Stößelkolbens 8 bewegt.

Um die Mitnahmeverbindungen der Druckplatte 5 zu dem Schwenkhebel 17a und dem beweglichen Bauteil 18a des Wegsensors 18 besonders stabil auszubilden, ist bei diesem Ausführungsbeispiel vorgesehen, dass die Druckplatte 5 radial außen einen radialen Vorsprung 18d aufweist, welcher in eine radiale Aufnahmenut 5b am stößelkolbenseitigen Ende des beweglichen Bauteils 18a des Wegsensors 18 eingreift. Der Aufbau des Wegsensors 18 beruht auf bekannten Funktionsprinzipien, wie Widerstandsänderung, variable Induktivität, variable Kapazität oder Zählen von Impulsen.

Erkennbar trägt die Leiterplatte 19 in diesem Ausführungsbeispiel auch einen Drucksensor 20, dem über eine Bohrung 27a im Regelventilgehäuse 2, 2c sowie eine daran anschließende Bohrung 27b im Bodenteil 7b des Elektronikgehäuses 7 derjenige pneumatische Druck zuleitbar ist, welcher in demjenigen Druckraum 26 herrscht, der axial unterhalb des Ventilkolbens 3 angeordnet ist. Eine als O-Ring ausgebildete weitere Dichtung 24 dichtet das Bodenteil 7b des Elektronikgehäuses 7 gegen das Regelventilgehäuse 2 im Bereich der genannten Bohrungen 27a, 27b ab.

Es ergibt sich somit, dass das Regelventil beziehungsweise der Bremswertgeber 1 weitgehend einer üblichen Bauart eines pneumatischen Zwei-Kreis-Bremswertgebers entspricht, wobei das Regelventilgehäuse 2 jedoch eine Aufnahmevorrichtung 14 für ein teilweise verschlossenes Elektronikgehäuse 7 aufweist, in dem eine Messeinheit 13 mit einem Schalter 17, einem Wegsensor 18 und einem Drucksensor 20 angeordnet ist. Dabei kann dieses Elektronikgehäuse 7 mit einer dem jeweiligen Anwendungsfall angepassten Messeinheit 13 bestückt sein, so dass nur das Elektronikgehäuse 7 mit einer entsprechenden Messeinheit 13 an die Aufnahmevorrichtung 14 des Bremswertgebers 1 angesetzt zu werden braucht, um dem jeweiligen Anwendungsfall zu entsprechen. Eine elektrische Verbindung der Messeinheit 13 mit einem Zentralmodul eines elektronisch geregelten Bremssystems eines Fahrzeugs lässt sich mittels des an der Außenwand des topfförmigen Deckels 7a des Elektronikgehäuses 7 angeordneten elektrischen Steckverbinders 21 herstellen.

Alle in der vorstehenden Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen und beanspruchten Merkmalskombinationen beschränkt, vielmehr sind alle Merkmalskombinationen als offenbart zu betrachten.

### Bezugzeichenliste (Bestandteil der Beschreibung)

- 1: Regelventil, Bremswertgeber
- 2: Regelventilgehäuse
- 2a: Oberer Gehäusebereich
- 2b: Unterer Gehäusebereich
- 2c: Mittlerer Gehäusebereich
- 3: Ventilkolben des ersten Ventilsystems
- 4: Erste Druckfeder
- 4a: Zweite Druckfeder
- 5: Druckplatte
- 5a: Einsenkung, wie Nut oder Schlitz, an der Druckplatte
- 5b: Radialer Vorsprung an der Druckplatte
- 6: Gehäusedeckel
- 7: Elektronikgehäuse
- 7a: Topfförmiger Deckel
- 7b: Bodenteil
- 8: Stößelkolben
- 10: Erstes Ventilsystem
- 11: Zweites Ventilsystem
- 12: Relaiskolben
- 13: Elektronische und/oder elektromechanische Messeinheit
- 14: Aufnahmevorrichtung für das Elektronikgehäuse
- 15: Raum zur Aufnahme des beweglichen Bauteil des Wegsensors
- 16: Dichtung
- 17: Ortsfester Schalter
- 17a: Schwenkhebel
- 17b: Schwenklager
- 17c: Erster Schenkel
- 17d: Zweiter Schenkel
- 18: Wegsensor
- 18a: Bewegliches Bauteil des Wegsensors
- 18b: Ortsfestes Bauteil des Wegsensors
- 18c: Radial nach innen weisendes Verbindungselement des Wegsensors
- 18d: Aufnahmenut am beweglichen Bauteil des Wegsensors
- 19: Leiterplatte
- 20: Drucksensor
- 21: Steckverbinder
- 22: Einstellschraube für Schwenkhebel
- 23: Führungsfläche für bewegliches Bauteil des Wegsensors
- 24: Dichtung
- 26: Druckraum unterhalb des Ventilkolbens 3
- 27a: Radiale Bohrung im Regelventilgehäuse 2, 2c
- 27b: Radiale Bohrung im Bodenteil 7b
- 28: Anschlagfläche am Stößelkolben
- 29: Anschlagscheibe
- 30: Dichtung

## Patentansprüche

1. Elektropneumatisches Regelventil (1), nämlich elektropneumatischer Zwei-Kreis-Bremswertgeber in einem Druckluftbremssystem eines Fahrzeugs, zum Ausregeln eines einer gewünschten Bremswirkung entsprechenden Bremsdrucks in einem ersten Bremskreis und in einem zweiten Bremskreis, mit einem in einem oberen Gehäusebereich (2a) und einem mittleren Gehäusebereich (2c) eines Regelventilgehäuses (2) angeordneten pedalbetätigbaren ersten Ventilsystem (10), mit einem in einem unteren Gehäusebereich (2b) des Regelventilgehäuses (2) angeordneten pneumatisch und/oder mechanisch durch das erste Ventilsystem (10) betätigbaren zweiten Ventilsystem (11), bei dem im ersten Ventilsystem (10) ein Ventilkolben (3) in dem Regelventilgehäuse (2) angeordnet ist, welcher mittels eines Stößelkolbens (8) gegen eine Federkraft axial verschiebbar ist, bei dem in einer Aufnahmevorrichtung (14) im Bereich des Stößelkolbens (8) oder des Ventilkolbens (3) des ersten Ventilsystems (10) ein elektrischer Schalter (17) zum Registrieren des Betätigungsbeginns des Regelventils (1) und ein Wegsensor (18) zum Ausgeben eines elektrischen Wegsignals zum Registrieren des Betätigungsweges des Stößelkolbens (8) angeordnet sind, und bei dem der elektrische Schalter (17) und der Wegsensor (18) an eine elektronische und/oder elektromechanische Messeinheit (13) angeschlossen sind, **dadurch gekennzeichnet, dass** die elektronische und/oder elektromechanische Messeinheit (13) als anwendungsspezifische Untereinheit eines elektronisch geregelten Bremssystems ausgebildet sowie in einem teilweise geschlossenen Elektronikgehäuse (7) angeordnet ist, und dass das Elektronikgehäuse (7) auswechselbar an oder in der Aufnahmevorrichtung (14) des Regelventils (1) befestigbar ist.

2. Elektropneumatisches Regelventil nach Anspruch 1, **dadurch gekennzeichnet, dass** das Elektronikgehäuse (7) einen topfförmigen Deckel (7a) und ein damit abgedichtet verbundenes Bodenteil (7b) aufweist, dass in dem Elektronikgehäuse (7) eine Leiterplatte (19) befestigt ist, welche ein ortsfestes Bauteil des elektrischen Schalters (17) und/oder ein ortsfestes Bauteil (18b) des Wegsensors (18) und/oder einen Drucksensor (20) trägt, dass die Leiterplatte (19) den Schalter (17) und/oder die Sensoren (18, 20) mit einem an der Außenseite des Elektronikgehäuses (7) angeordneten Steckverbinder (21) elektrisch verbindet, und dass das Elektronikgehäuse (7) derart in die an der radialen Außenseite des Regelventilgehäuses (2) ausgebildete Aufnahmevorrichtung (14) des Regelventils (1) befestigbar ist, dass zwischen dem Bodenteil (7b) des Elektronikgehäuses (7) und der radialen Außenseite des Regelventilgehäuses (2) ein Raum (15) ausgebildet ist, in dem ein bewegliches Bauteil (17a) des elektrischen Schalters (17) und/oder ein bewegliches Bauteil (18a) des Wegsensors (18) angeordnet sind.

3. Elektropneumatisches Regelventil nach Anspruch 2, **dadurch gekennzeichnet, dass** das bewegliche Bauteil (18a) des Wegsensors (18) radial innen an einer Führungsfläche (23) an der radialen Außenseite des Regelventilgehäuses (2) geführt wird.

4. Elektropneumatisches Regelventil nach einem der Ansprüche 2 bis 3, **dadurch gekennzeichnet, dass** in dem oberen Gehäusebereich (2a) des Regelventilgehäuses (2) eine kreisförmige Druckplatte (5) angeordnet ist, auf deren Oberseite der Stößelkolben (8) wirkt und an dessen Unterseite sich mindestens eine Druckfeder (4, 4a) axial abstützt, dass die Druckplatte (5) radial außen eine radiale Einsenkung (5a) aufweist, und dass am stößelkolbenseitigen Ende des beweglichen Bauteils (18a) des Wegsensors (18) ein radial nach innen weisendes Verbindungselement (18c) ausgebildet ist, welches in die radiale Einsenkung (5a) der Druckplatte (5) eingreift.

5. Elektropneumatisches Regelventil nach einem der Ansprüche 2 bis 4, **dadurch gekennzeichnet, dass** die Druckplatte (5) radial außen einen radialen Vorsprung (18d) aufweist, welcher in eine radiale Aufnahmenut (5b) am stößelkolbenseitigen Ende des beweglichen Bauteils (18a) des Wegsensors (18) eingreift.

6. Elektropneumatisches Regelventil nach einem der Ansprüche 2 bis 5, **dadurch gekennzeichnet, dass** der elektrische Schalter (17) von einem an einem Schwenklager (17b) drehbarer gelagerten Schwenkhebel (17a) betätigbar ist, dass der Schwenkhebel (17a) zwei miteinander verbundene Schenkel (17c, 17d) aufweist, von denen der erste, radial ausgerichtete Schenkel (17c) in die radiale Einsenkung (5a) an der Druckplatte (5) eingreift, und von denen der zweite, axial ausgerichtete Schenkel (17d) mittels einer nach radial außen gerichteten Schwenkbewegung den Schalter (17) betätigen kann.

7. Elektropneumatisches Regelventil nach einem der Ansprüche 1 bis 6, **dadurch gekennzeichnet, dass** im Regelventilgehäuse (2) eine radiale Bohrung (27a) ausgebildet ist, welche über eine radiale Bohrung (27b) im Bodenteil (7b) des Elektronikgehäuses (7) einen axial unterhalb des Ventilkolbens (3) ausgebildeten Druckraum (26) mit dem Drucksensor (20) verbindet.

8. Nutzfahrzeug mit einem elektropneumatischen Regelventil (1) gemäß einem der Ansprüche 1 bis 7.

9. Verwendung des elektropneumatischen Regelventils (1) gemäß einem der Ansprüche 1 bis 7 in einem mit einem elektronisch geregelten Bremssystem ausgestatteten Nutzfahrzeug.

## Claims

1. Electropneumatic control valve (1), specifically electropneumatic dual-circuit brake signal transmitter in a compressed-air brake system of a vehicle, for the regulation of a brake pressure corresponding to a desired braking action, in a first brake circuit and in a second brake circuit, having a first pedal-activated valve system (10), which is arranged in an upper housing region (2a) and in a middle housing region (2c) of a control valve housing (2), having a second valve system (11), which is arranged in a lower housing region (2b) of the control valve housing (2) and can be activated pneumatically and/or mechanically by the first valve system (10), in which, in the first valve system (10), a valve piston (3) is arranged in the control valve housing (2), which valve piston can be displaced axially counter to a spring force by means of a plunger piston (8), in which, in a receiving device (14) in the region of the plunger piston (8) or of a valve piston (3) of the first valve system (10) there are arranged an electrical switch (17) for recording the start of activation of the control valve (1) and a travel sensor (18) for outputting an electrical travel signal for recording the activation travel of the plunger piston (8), and in which the electrical switch (17) and the travel sensor (18) are connected to an electronic and/or electromechanical measuring unit (13), **characterized in that** the electronic and/or electromechanical measuring unit (13) are embodied as an application-specific sub-unit of an electronically controlled brake system and is/are arranged in a partially enclosed electronics housing (7), and **in that** the electronics housing (7) can be exchangeably attached to or in the receiving device (14) of the control valve (1).

2. Electropneumatic control valve according to Claim 1, **characterized in that** the electronics housing (7) has a pot-shaped cover (7a) and a base part (7b) connected thereto in a sealed manner, **in that** a circuit board (19) is attached in the electronics housing (7), which circuit board (19) supports a fixed component of the electrical switch (17) and/or a fixed component (18b) of the travel sensor (18) and/or a pressure sensor (20), **in that** the circuit board (19) electrically connects the switch (17) and/or the sensors (18, 20) to a plug-type connector (21) which is arranged on the outer side of the electronics housing (7), and **in that** the electronics housing (7) can be attached into the receiving device (14) of the control valve (1), which is formed on the radial outer side of the control valve housing (2), and **in that** a space (15), in which a movable component (17a) of the electrical switch (17) and/or removable component (18a) of the travel sensor (18) are/is arranged, is formed between the base part (7b) of the electronics housing (7) and the radial outer side of the control valve housing (2) .

3. Electropneumatic control valve according to Claim 2, **characterized in that** the movable component (18a) of the travel sensor (18) is guided radially inwards on a guide surface (23) on the radial outer side of the control valve housing (2) .

4. Electropneumatic control valve according to one of Claims 2 to 3, **characterized in that** a circular pressure plate (5) is arranged in the upper housing region (2a) of the control valve housing (2), on the upper side of which circular pressure plate (5) the plunger piston (8) acts and on the underside of which plunger piston (8) at least one compression spring (4, 4a) is supported axially in such a way that the pressure plate (5) has, radially outwardly, a radial cavity (5a), and **in that** a radially inward-facing connecting element (18c), which engages in the radial cavity (5a) of the pressure plate (5), is formed on the plunger-piston-side end of the movable component (18a) of the travel sensor (18).

5. Electropneumatic control valve according to one of Claims 2 to 4, **characterized in that** the pressure plate (5) has, radially outwardly, a radial projection (18d), which engages in a radial receiving groove (5b) on the plunger-piston-side end of the movable component (18a) of the travel sensor (18).

6. Electropneumatic control valve according to one of Claims 2 to 5, **characterized in that** the electrical switch (17) can be activated by a pivoted lever (17a) which is rotatably mounted on a pivot bearing (17b), **in that** the pivoted lever (17a) has two limbs (17c, 17d) which are connected to one another, the first radially oriented limb (17c) of which engages in the radial cavity (5a) on the pressure plate (5), and the second axially oriented limb (17d) of which can activate the switch (17) by means of a radially outwardly directed pivoting movement.

7. Electropneumatic control valve according to one of Claims 1 to 6, **characterized in that** formed in the radial valve housing (2) is a radial drilled hole (27a) which connects a pressure space (26), formed axially underneath the valve piston (3), to the pressure sensor (20) via a radial drilled hole (27b) in the base part (7b) of the electronics housing (7).

8. Utility vehicle having an electropneumatic control valve (1) according to one of Claims 1 to 7.

9. Use of the electropneumatic control valve (1) according to one of Claims 1 to 7 in a utility vehicle which is equipped with an electronically controlled brake system.

## Revendications

1. Soupape de commande électropneumatique (1), notamment un transducteur de freinage à double circuit électropneumatique dans un système de freinage à air comprimé d'un véhicule, servant à réguler une pression de freinage, correspondant à une action de freinage souhaitée, dans un premier circuit de freinage et dans un deuxième circuit de freinage, comprenant un premier système de soupape (10), actionnable au moyen d'une pédale, qui est disposé dans une zone de boîtier supérieure (2a) et dans une zone de boîtier médiane (2c) d'un boîtier de soupape de commande (2), comprenant un deuxième système de soupape (11) qui est disposé dans une zone de boîtier inférieure (2b) du boîtier de soupape de commande (2) et qui est actionnable pneumatiquement et/ou mécaniquement par l'intermédiaire du premier système de soupape (10), dans lequel, dans le premier système de soupape (10), un piston de soupape (3) est disposé dans le boîtier de soupape de commande (2) et est déplaçable axialement au moyen d'un piston plongeur (8) en s'opposant à une force de ressort, dans lequel un commutateur électrique (17) servant à définir le début de l'actionnement de la soupape de commande (1) et un capteur de course (18) servant à délivrer en sortie un signal de course électrique pour définir la course d'actionnement du piston plongeur (8) sont disposés dans un dispositif de réception (14) dans la zone du piston plongeur (8) ou du piston de soupape (3) du premier système de soupape (10), et dans lequel le commutateur électrique (17) et le capteur de course (18) sont raccordés à une unité de mesure électronique et/ou électromécanique (13), **caractérisé en ce que** l'unité de mesure électronique et/ou électromécanique (13) est réalisée sous la forme d'une sous-unité, spécifique à une application, d'un système de freinage à commande électronique et est disposée dans un boîtier électronique (7) partiellement fermé, et **en ce que** le boîtier électronique (7) peut être fixé de manière interchangeable sur ou dans le dispositif de réception (14) de la soupape de commande (1) .

2. Soupape de commande électropneumatique selon la revendication 1, **caractérisée en ce que** le boîtier électronique (7) comporte un couvercle (7a) en forme de pot et une partie de fond (7b) qui lui est reliée de manière étanche, **en ce que**, dans le boîtier électronique (7), est fixée une carte de circuit imprimé (19) qui porte un composant fixe du commutateur électrique (17) et/ou un composant fixe (18b) du capteur de course (18) et/ou un capteur de pression (20), **en ce que** la carte de circuit imprimé (19) relie électriquement le commutateur (17) et/ou les capteurs (18, 20) à un connecteur (21) disposé sur la face extérieure du boîtier électronique (7), et **en ce que** le boîtier électronique (7) peut être fixé dans le dispositif de réception (14) de la soupape de commande (1), qui est réalisé sur la face radialement extérieure du boîtier de soupape de commande (2) de manière à ce qu'un espace (15) soit formé entre la partie de fond (7b) du boîtier électronique (7) et la face radialement extérieure du boîtier de soupape de commande (2), espace dans lequel sont disposés un composant mobile (17a) du commutateur électrique (17) et/ou un composant mobile (18a) du capteur de course (18).

3. Soupape de commande électropneumatique selon la revendication 2, **caractérisée en ce que** le composant mobile (18a) du capteur de course (18) est guidé radialement vers l'intérieur sur une surface de guidage (23) située sur la face radialement extérieure du boîtier de soupape de commande (2).

4. Soupape de commande électropneumatique selon l'une des revendications 2 à 3, **caractérisée en ce que**, dans la zone supérieure (2a) du boîtier de soupape de commande (2), est disposée une plaque de pression circulaire (5) sur la face supérieure de laquelle agit le piston plongeur (8) et sur la face inférieure de laquelle repose axialement au moins un ressort de compression (4, 4a), **en ce que** la plaque de pression (5) présente radialement à l'extérieur un évidement radial (5a), et **en ce qu'**un élément de liaison (18c) dirigé radialement vers l'intérieur est réalisé à l'extrémité côté piston plongeur du composant mobile (18a) du capteur de course (18), lequel élément de liaison s'engage dans l'évidement radial (5a) de la plaque de pression (5).

5. Soupape de commande électropneumatique selon l'une des revendications 2 à 4, **caractérisée en ce que** la plaque de pression (5) présente radialement vers l'extérieur une saillie radiale (18d) qui s'engage dans une rainure de réception radiale (5b) à l'extrémité côté piston plongeur du composant mobile (18a) du capteur de course (18).

6. Soupape de commande électropneumatique selon l'une des revendications 2 à 5, **caractérisée en ce que** le commutateur électrique (17) est actionnable par un levier pivotant (17a) monté à rotation sur un palier de pivotement (17b), **en ce que** le levier pivotant (17a) présente deux branches (17c, 17d) reliées entre elles, dont la première branche (17c), orientée radialement, s'engage dans l'évidement radial (5a) de la plaque de pression (5), et dont la deuxième branche (17d), orientée axialement, peut actionner le commutateur (17) par un mouvement de pivotement dirigé radialement vers l'extérieur.

7. Soupape de commande électropneumatique selon l'une des revendications 1 à 6, **caractérisée en ce qu'**un alésage radial (27a) est réalisé dans le boîtier de soupape de commande (2), lequel alésage radial relie une chambre de pression (26), réalisée axialement en dessous du piston de soupape (3), au capteur de pression (20) par l'intermédiaire d'un alésage radial (27b) dans la partie de fond (7b) du boîtier électronique (7) .

8. Véhicule utilitaire comportant une soupape de commande électropneumatique (1) selon l'une des revendications 1 à 7.

9. Utilisation de la soupape de commande électropneumatique (1) selon l'une des revendications 1 à 7 dans un véhicule utilitaire équipé d'un système de freinage à commande électronique.
